# EUROPEAN PATENT APPLICATION

(11) **EP 4 804 421 A1**
(43) Date of publication of application: **09.09.2026**
(21) Application number: 25162377.3
(22) Date of filing: 07.03.2025
(51) Int. Cl.: H04B 7/0413, G01S 11/02, G01S 17/06, H04L 25/02, H04M 1/72454, H04W 24/00

(54) **METHODS OF SENSING USING MIMO**

(71) Applicant: Vodafone Group Services Limited, Newbury, Berkshire RG14 2FN (GB)
(72) Inventor: BOUKLEY HASAN, Wael, London, W2 6BY (GB)
(74) Representative: Boult Wade Tennant LLP

(57) **Abstract**

According to a first aspect there is provided a method for sensing using a user equipment, UE, in communication with a multiple-input, multiple-output, MIMO, base station, BS. The method comprises communicating a plurality of uplink sensing signals from the UE to the MIMO base station, wherein the plurality of uplink sensing signals are received at the MIMO base station via a plurality of spatial paths, such that the MIMO base station can determine environmental information about a spatial area based on a delay and/or delay spread of the plurality of uplink sensing signals; communicating the environmental information from the MIMO base station to the UE via a downlink transmission, such that the UE can construct a map of the spatial area using the received environmental information. According to a second aspect there is provided a method for sensing using a user equipment, UE, in communication with a multiple-input, multiple-output, MIMO, base station, BS. The method comprises communicating a plurality of uplink signals from the UE to the MIMO base station, wherein the plurality of uplink signals are received at the MIMO BS via a plurality of spatial paths; communicating a plurality of precoded downlink signals from the MIMO BS to the UE over some or all of the plurality of spatial paths;
analysing the plurality of precoded downlink signals, at the UE, to determine a delay and/or delay spread of the downlink signals such that the UE can determine environmental information about the spatial area based on the determined delay and/or delay spread.

## Description

### FIELD

The present invention relates to providing methods for sensing objects using telecommunications network infrastructure.

### BACKGROUND

Future systems for telecommunications or telecommunications networks may integrate both sensing and communications technologies. Such networks may use the same spectrum for both wireless communication and sensing. This allows base stations to understand their environment while transmitting data.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; Al model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

It has been appreciated herein that prior art does not provide an integration between devices and the ISAC framework in such a way that a base station and wireless communication device can work together to provide real-time spatial awareness.

Smart glasses are a particular device which may be located within a telecommunications network and may require real-time spatial awareness. In particular, it has been realised herein that devices having extended reality (XR) and augmented reality (AR) devices technology require knowledge of their surrounding area. XR is becoming integrated into mobile networks, and ensuring low-latency and high accuracy environmental perception is important for a number of applications including gaming, remote assistant, industrial automation and smart city navigation. However, there is currently no methods which address how to provide spatial awareness to devices using a telecommunications network infrastructure. Instead, XR devices are currently relying on onboard sensors, such as cameras, LiDAR, and inertial measurement units (IMUs). XR devices are also using cloud-based Al processing which requires a constant uplink connectivity, which can lead to latency issues.

Therefore, it has been appreciated herein that methods are required to improve the use of XR devices on a telecommunications network.

### SUMMARY

According to a first aspect, there is provided a method for sensing using a user equipment, UE, in communication with a multiple-input, multiple-output, MIMO, base station, BS. The method comprises:
communicating a plurality of uplink sensing signals from the UE to the MIMO base station, wherein the plurality of uplink sensing signals are received at the MIMO base station via a plurality of spatial paths, such that the MIMO base station can determine environmental information about a spatial area based on a delay and/or delay spread of the plurality of uplink sensing signals;
communicating the environmental information from the MIMO base station to the UE via a downlink transmission, such that the UE can construct a map of the spatial area using the received environmental information.

This method provides the advantage of using the base station to carry out some of the data processing, which reduces the amount of processing required at the UE. Using the method of the first aspect, the base station may provide environmental information, which may be mapping, to the UE for the UE to construct a model of the surrounding area. The methods described herein provide the advantage that the method is accurate even when the UE is located indoors, whereas sensors such as GPS would be less accurate if used indoors. By using the telecommunications network infrastructure for sensing objects to result in the UE having a map of the area, less sensors may be required at the UE. The UE may either be constructed with less sensors, to reduce costs, or the sensors on the UE may only be activated when it is determined that the sensors are required for gathering additional environmental information. For example, it could be determined that an object has been identified by using the method of the first aspect, and then it may be determined that a sensor should be activated to determined more information about this object. The method also has the advantage that it may reduce latency compared to known methods of using sensors for determining objects and processing the sensor data at the UE itself.

In some examples, communication data is communicated in the same downlink signals as the environmental information.

In some examples, the uplink sensing signals are uplink pilot signals, such that the BS can determine information about the plurality of spatial paths.

In some examples, the step of determining environmental information includes monitoring the delay and/or delay spread between paths from the same uplink signal and the delay and/or delay spread on a subsequent uplink signal. The step of determining environmental information may therefore include monitoring the delay between paths, and/or monitoring the delay spread between paths.

In some examples, the environmental information is continuously or periodically determined such that the UE can update the map based on changes in the environmental information.

In some examples, combining the environmental information with one or more types of information from one or more sensors, wherein the one or more sensors are located on the UE.

In some examples, the environmental information is used to control the activation of one or more sensors located on the UE.

According to a second aspect, there is provided a method for sensing using a user equipment, UE, in communication with a multiple-input, multiple-output, MIMO, base station, BS. The method comprises: communicating a plurality of uplink signals from the UE to the MIMO base station, wherein the plurality of uplink signals are received at the MIMO BS via a plurality of spatial paths;
communicating a plurality of precoded downlink signals from the MIMO BS to the UE over some or all of the plurality of spatial paths;
analysing the plurality of precoded downlink signals, at the UE, to determine a delay and/or delay spread of the downlink signals such that the UE can determine environmental information about the spatial area based on the determined delay and/or delay spread.

This method provides the advantage of providing a method for sensing objects surrounding the UE without relying on onboard sensors. Instead, the method uses the telecommunications network infrastructure to provide information to the UE which would enable the UE to construct a map of the spatial area. As in the first aspect, the method therefore may reduce processing required at the UE as sensor information is not required to be analysed. Furthermore, the second aspect reduces complexity at the base station by instead determining the environmental information at the UE. The second aspect also provides more privacy to the UE devices, as environmental information is not being determined at the base station, and instead the environmental information is determined at the UE itself.

In some examples, determining a delay and/or delay spread of the downlink signals comprises one or more of:
monitoring the delay between paths from the same downlink signal and the delay on a subsequent downlink signal;
monitoring the time at which an uplink signal is transmitted from the UE along one of the plurality of spatial paths and the time at which a downlink signal is received at the UE along the same spatial path, and comparing the time difference with an expected time difference; and/or
calculating the time duration that it takes for a signal to be received at the BS from the UE.

In some examples, the method further comprises precoding a plurality of downlink signals at the base station, wherein the plurality of downlink signals are precoded based on the received plurality of uplink signals.

In some examples, the method further comprises analysing the received plurality of uplink signals at the base station to determine a delay and/or delay spread of the uplink signals, and determining environmental data about a spatial location based on the delay and/or delay spread.

In some examples, the step of constructing the map is further based on the amplitudes and phases of the received precoded downlink signals.

In some examples, the method further comprises transmitting the map from the UE to the base station.

In another aspect there is provided a user equipment (UE) configured to perform any of the methods described herein.

In another aspect there is provided a multiple-input multiple-output (MIMO) base station, configured to perform any of the methods described herein.

### BRIEF DESCRIPTION OF DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labelled in every figure.
Fig. 1 shows an exemplary telecommunications system illustrating communication signals;
Fig. 2 shows a flowchart of an exemplary method for sensing using a UE and a BS; and
Fig. 3 shows a flowchart of an exemplary method for sensing using a UE and a BS.
The invention will now be described in relation to specific embodiments. The embodiments described herein are not intended to be limiting and are for illustrative purposes.

### DETAILED DESCRIPTION OF PREFERRED EMBODIMENTS

There is described herein examples of methods which can be used to provide information about a device's surroundings, to provide real-time environmental data. The methods described herein may be applied to current systems for telecommunications or telecommunications networks (4G/LTE or 5G/NR),such as 3GPP 5G Release 19. The methods described herein may also be used in future generation technologies such as 3GPP 5G Release 20 and 3GPP 6G Release 21, where sixth generation technology will include ISAC (integrated sensing and communication).

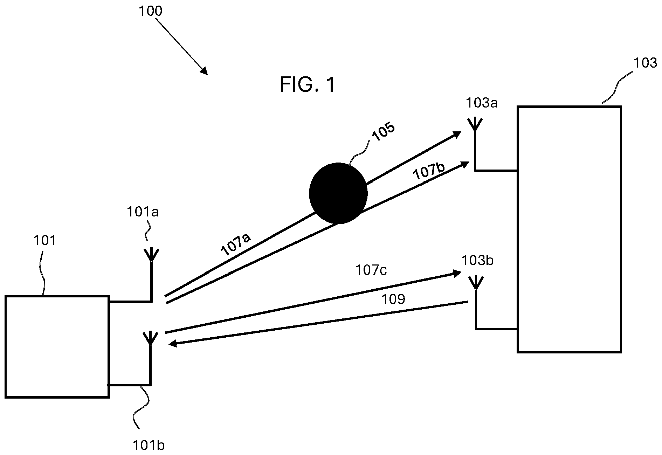

Figure 1 shows a wireless multiple-input, multiple-output (MIMO) communications system 100. The system comprises at least one user equipment (UE) 101 which may comprise multiple antenna 101a and 101b, and a base station (BS) 103, wherein the BS is a MIMO station. In other examples, the BS may have ISAC capabilities. The BS comprises a plurality of antennas 103a and 103b configured to transmit to and receive signals from the antennas of the one or more UEs on the network. Figure 1 shows a 2x2 MIMO system, wherein the BS and UE both comprise two antennas. However, it will be appreciated that other MIMO systems are suitable for performing the novel techniques described herein. In some implementations the BS may be a massive MIMO base station.

The MIMO base station may operate with a large spatial diversity, i.e. the signals communicated between the BS and the UE may take multiple paths, wherein the paths are spatially separate. Therefore, the MIMO system shown in figure 1 may implement spatial multiplexing to transmit multiple data streams between the UE and BS wherein the multiple data streams may take different spatial paths. For example, as shown in figure 1, the UE may transmit uplink signals 107a, 107b and 107c to the base station during an uplink transmission, wherein the uplink signals may take different paths. The uplink signals may be transmitted to the base station simultaneously. The uplink signals from one antenna may be received at multiple antennas of the base station, as the BS comprises multiple antennas. The BS may use any suitable method to determine the path via which the signals have travelled. Some examples of such methods are described herein. The BS is configured to transmit one or more downlink signals 109 to the UE, wherein the downlink signals are transmitted from one or more of the base station antennas 103 and 103b to one or more of the UE antennas 101 and 101b.

As shown in figure 1, there may be one or more objects 105 located in a spatial area surrounding the UE. The object 105 may obstruct the path of one or more UL or DL signals.

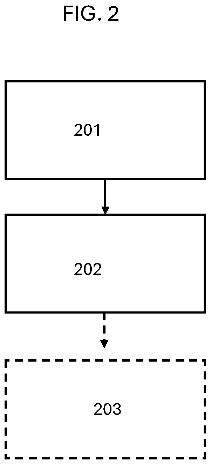

A first method of sensing will be described in relation to figures 1 and 2. Figure 1 illustrates a system suitable for performing the method, however it will be appreciated that the method is not limited to the system described in figure 1. Figure 2 is a flowchart illustrating the method steps of this first embodiment.

In this first embodiment, at a first step 201, the UE may transmit a plurality of uplink (UL) sensing signals to the base station. The plurality of UL sensing signals may be transmitted over a plurality of spatial paths, as described in relation to figure 1. In some examples, the UL sensing signal may be an UL pilot signal as defined in current 3GPP standards. Alternatively, the UL sensing signals may be UL sensing signals which are specifically for the use of sensing as described herein.

The one or more UL sensing signals enable the BS to estimate the channel conditions between the UE and BS, for example the BS may be able to estimate the multipath structure surrounding the UE. The UL sensing signals may also be used in additional ways, which will not be described herein, for example for synchronising the UE and the base station. Therefore, using the UL sensing signals, the BS can determine which paths signals are transmitted via during the uplink transmission. One example of UL sensing signals are uplink pilot signals which may be used (i.e. analysed) by the base station to provide channel state information (CSI) about each of the channels between the multiple UE antenna and multiple BS antenna. For example, the CSI may indicate fading, power decay, scattering, etc. for each of the channels. The UL sensing signals may also be used by the BS to determine the relative movement and position of the UE within the spatial environment, i.e. the environment surrounding the BS and UE. The BS is configured to use the UL sensing signals to determine the direction and distance of the UE from the BS by using any suitable known technique. For example, the BS may use the configuration of the plurality of antenna to determine the phase and amplitude of each of the received signals at each antenna. By comparing the phase and amplitude of the UL signals at each antenna, for example using a direction of arrival (DoA) estimation, the BS can determine the relative direction and distance of the UE from the base station.

In step 201, the base station may determine environmental information about a spatial area based on the plurality of UL signals. The environmental information may comprise data indicative of any one or more of: the location of an object relative to the UE and/or base station, size of the object and movement of the object. The spatial area may be the area over which the UL signals are transmitted via the spatial paths. In other words, the greater the number of spatial paths, the greater the spatial area over which environmental information may be determined. The UL sensing signals are such that environmental information about the spatial area (i.e. spatial information) can be determined from the plurality of UL signals, where the environmental information may include information about one or more objects within the spatial area. In other words, the base station may determine whether the UL sensing signals have interacted with one or more objects during their transmission between the UE and BS.

The environmental information may be determined based on a delay and/or delay spread of the plurality of UL sensing signals. The delay spread described herein refers to the difference between the time of arrival of the earliest component and the time of arrival of the latest multipath component. The environmental information may alternatively or additionally be determined based on determining the delay and/or delay spread in a first plurality of UL sensing signals, and determining the delay and/or delay spread in a second plurality of UL sensing signals and determining the variation between the delay and/or delay spreads. It will be appreciated that other methods of determining whether a signal has been delayed can be used in this method in addition or as an alternative to the other methods described herein, for example by comparing an expected time of arrival of a signal and the actual time of arrival of a signal.

Therefore, the exemplary method described with relation to figure 2 determines environmental information at the base station, using one or more uplink sensing signals received at the base station from the UE. Determining the environmental information may also comprise using signals received at the BS from one or more additional UEs in the same network. The BS may therefore use signals received from a plurality of UEs to determine the environmental information for use in a map or 3D model. The signals received at the BS from the one or more additional UEs may be used to determine information about the spatial area in the same way as described herein, e.g. by determining delay and/or delay spread in the UL sensing signals transmitted to the BS from the additional UE(s). By using one or more additional UEs, the BS can gather information about different spatial areas compared to using signals from one UE alone.

In the second step 202 of this method, the environmental information is communicated from the BS to the UE. Therefore, environmental information is transmitted from the BS to the UE during a DL transmission. The communication data (e.g. user data, video data, audio data, application data) and the environmental information (otherwise referred to as environmental data) may be included in the same downlink signals. The downlink signals may be precoded, as will be described with reference to the second method described herein.

As described in relation to figure 1, the BS is configured to transmit downlink signals 109 from one or more of its antennas 103a and 103b. In the example of figure 1 the BS transmits the downlink signals from each of their antennas. In this method, the downlink signals may be transmitted along some or all of the same paths as the uplink signals. The UE may be configured to construct a map or 3D spatial model of the spatial area using the received environmental information.

The environmental information may be periodically or continuously determined such that the UE can construct a real time mapping or model. The environmental information may be sent to the UE continuously, periodically, or only when the information has changed since the information was last sent to the UE (e.g. an object has moved, or a new object is present in the spatial area).

Therefore, the method described with relation figure 2 is a method for sensing an object in a spatial area wherein the BS is used to offload some of the data processing when providing a map or model at the UE. As the BS determines the environmental information, and provides this to the UE, the processing is reduced at the UE. The UE can therefore have a lower complexity and also reduced energy consumption (due to the sensing being passive) compared to known methods for providing mapping at a UE, in particular at an extended reality device. In the example of an extended reality device, the method can be used to enhance extended reality overlaps to ensure that augmented objects align accurately with the real world by improving object detection.

In some alternate examples of this method the environmental information sent from the BS to the UE may be mapping, instead of data regarding location, size of an object etc. This would further reduce the amount of data processing required at the UE as the UE would not be required to create a map itself.

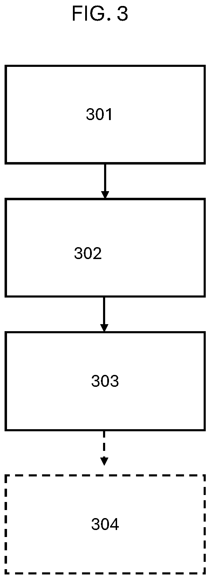

A second method of sensing will be described in relation to figures 1 and 3. Figure 1 illustrates a system suitable for performing the method, however it will be appreciated that the method is not limited to the system described in figure 1. Figure 3 is a flowchart illustrating the method steps of this second method.

At the first step 301, a plurality of uplink signals are transmitted from the UE to the base station. As described herein, the uplink signals may be uplink sensing signals, and the base station may be a MIMO base station. The uplink signal may have the same features as described in relation to figure 2. As described in other embodiments herein, the plurality of uplink signals are transmitted via a plurality of spatial paths. The uplink sensing signals may provide information about the channels to the base station, for example the uplink sensing signal may inform the base station about the number of paths in the multipath structure surrounding the UE.

At the second step 302, a plurality of precoded downlink signals are transmitted from the BS to the UE over a plurality of the spatial paths. The precoded downlink signals may be precoded downlink sensing signals. The downlink signals may be transmitted over all available spatial paths, a subset of the plurality of spatial paths, or over all the same spatial paths as used for transmitting the uplink signals. The downlink signals are transmitted over a plurality of paths which optimise the spatial diversity of the paths, or have the most spatial diversity. In this way, the paths used for downlink transmission may be used to increase the area over which the signals travel to improve the method of sensing described herein.

The plurality of downlink signals may be precoded by the BS based on the uplink sensing signals received at the BS. The signals are precoded to optimise the signal to account for the multipath reflections to ensure that the signals interact optimally with objects within the surrounding area of the UE. The signal may be precoded to reduce the energy of the signal along each path such that the signals can cover more paths. This is instead of predocing the signal to focus the DL energy on a smaller number of paths. Unlike conventional precoding techniques, the aim here is to increase the number of DL paths instead of handling interference between UEs, increasing cell coverage or throughput. By increasing the number of paths, more information about the UE's (e.g. the XR device's) surroundings can be obtained.

At the third step 303, the DL signals are analysed by the UE to determine information about any variations in the expected signals, for example, any delays and/or any data which has not been received during the downlink transmission (e.g. any missing signals). To determine such irregularities, the UE may determine the delay and/or delay spread of the precoded DL signals with which the UE can construct a map of the spatial area surrounding the UE. In one example, the DL signals received at the UE are compared to the UL signals transmitted by the UE. For example, the paths over which the signals are transmitted and received may be compared to determine whether any signals are missing, which may indicate that an object is obstructing the path. Additionally or alternatively, the time at which the UL signals are transmitted to the BS may be compared with the time at which the DL signals are received at the UE at each path, i.e. the round trip time for each path, to determine delays on each path. Additionally or alternatively, the time at which the signals are transmitted from the UE and the time at which the signals are received at the BS may be compared to determine a delay during UL transmission. The delay information may alternatively or additionally be determined by monitoring the delay and/or delay spread in a first plurality of DL signals, and the delay and/or delay spread in a second (subsequent) plurality of DL signals and determining the variation between the delay and/or delay spreads to create accurate information about the spatial area.

It has been appreciated that each multipath component has a unique delay spread, depending on the distance and location of surrounding objects. Therefore, by analysing the DL signals at the UE, where the DL signals are sent over a plurality of spatial paths, the UE can gather information about the spatial area surrounding the UE. The UE may determine the the amplitude and/or phase of each signal, where any one or more of: delay, delay spread, amplitude and/or phase, may be used to construct the spatial (i.e. environmental) map. The amplitude provides information about the distance from the object to the UE and/or base station, and may also indicate the material of the object. The UE may determine that signals which arrive on paths before other paths but have larger amplitude, indicate that they are propagated via obstacles. If the signal was received with low amplitude and large delay, it may indicate a larger distance to the object. The phase of a signal indicates the direction that the signal has been received from.

In a fourth step 304 the UE may constructs the real-time map or 3D spatial model as described herein.

In some examples, aspects from the first and second methods (i.e. figures 2 and 3) may be combined. In such an example, the second method may comprise a step of the base station determining environmental information based on the uplink sensing signals using the method described in relation to the first method. The base station may provide the environmental information to the UE, and the UE may combine this information with the environmental information determined at the UE in step 303. The UE may use this additional environmental information (received from the BS) to enhance the mapping.

It will be appreciated that other techniques from each of the methods may be combined to improve the method of sensing.

Any of methods described herein may be performed using a MIMO base station, or a massive MIMO base station. In another example, any of the methods described herein may be performed by an ISAC (Integrated Sensing and Communication) MIMO base station, or ISAC massive MIMO base station. ISAC technology simultaneously serves traditional wireless communication services and act as a sensor node (e.g., by providing sensing functionality similar to radar) to provide environmental sensing functionality to detect objects which are not connected to the network. As described herein, the method may be used to transmit sensing signals and communication signals to the UE. In addition to the steps described in each method herein, the BS may transmit a sensing signal from the ISAC base station, and the signal may be reflected from an object and received back at the BS. The BS may use the round-trip time of the signal to determine the distance from the object to the BS. This distance may be used by the base station during the step of determining environmental information or mapping at the BS, as described in relation to the first method described herein in relation to figure 2.

The maps and models described herein may be constructed using any suitable method for constructing maps and models based on environmental data. As described herein, the environmental data may comprise information regarding location and/or size and/or movement of the object.

In some examples, the mapping created by the UE using any method described herein may be transmitted from the UE to the BS. Therefore, the BS has a copy of the mapping. The BS may receive mapping from other UEs in the telecommunications network, and therefore the BS may combine mapping from one or more UEs to provide a mapping of a larger spatial area.

In some examples, the environmental information received at the UE may be combined with other information obtained by the UE. For example, in the example in which the UE referred to herein is an extended reality (XR) device, the UE may comprise one or more sensors where the measurements from one or more sensors may be combined with the environmental information. For example, the environmental information may be combined with information from one or more of: accelerometers, GPS receivers, cameras, Light Detection and Ranging (LiDAR), inertial measurement units (IMUs). The method of using data from the UE and/or BS for sensing may be used in combination with sensor information, or the UE and BS may be used to determine that an object is present in the spatial area and the sensors may then be used to determine additional information about the object. Therefore, the sensors may be deactivated until an object is sensed via the UE and BS using methods described herein.

The following numbered clauses show further illustrative examples only:
1. A method for sensing using a user equipment, UE, in communication with a multiple-input, multiple-output, MIMO, base station, BS, the method comprising:
   communicating a plurality of uplink sensing signals from the UE to the MIMO base station, wherein the plurality of uplink sensing signals are received at the MIMO base station via a plurality of spatial paths, such that the MIMO base station can determine environmental information about a spatial area based on a delay and/or delay spread of the plurality of uplink sensing signals;
   communicating the environmental information from the MIMO base station to the UE via a downlink transmission, such that the UE can construct a map of the spatial area using the received environmental information.
2. The method according to any preceding clause further comprising communicating communication data in the same downlink signals as the environmental information.
3. The method according to any preceding clause wherein the uplink sensing signals are uplink pilot signals, such that the BS can determine information about the plurality of spatial paths.
4. The method according to any preceding clause wherein the step of determining environmental information includes monitoring the delay between paths from the same uplink signal and the delay on a subsequent uplink signal.
5. The method according to any preceding clause wherein the environmental information is continuously or periodically determined such that the UE can update the map based on changes in the environmental information.
6. The method according to any preceding clause further comprising combining the environmental information with one or more types of information from one or more sensors, wherein the one or more sensors are located on the UE.
7. The method according any preceding clause wherein the environmental information is used to control the activation of one or more sensors located on the UE.
8. The method according to any of clauses 6 or 7 wherein the sensors are accelerometers, GPS receivers, cameras, LiDAR.
9. The method according to any of clauses 6 to 8 wherein the method further comprises controlling one or more sensors based on the environmental information.
10. The method according to clause 9 wherein controlling the one or more sensors comprises activating or deactivating one or more of the sensors based on an object being detected in the spatial area.
11. A method for sensing using a user equipment, UE, in communication with a multiple-input, multiple-output, MIMO, base station, BS, the method comprising:
   communicating a plurality of uplink signals from the UE to the MIMO base station, wherein the plurality of uplink signals are received at the MIMO BS via a plurality of spatial paths;
   communicating a plurality of precoded downlink signals from the MIMO BS to the UE over some or all of the plurality of spatial paths;
   analysing the plurality of precoded downlink signals, at the UE, to determine a delay and/or delay spread of the downlink signals such that the UE can determine environmental information about the spatial area based on the determined delay and/or delay spread.
12. The method according to clause 11 wherein the plurality of downlink signals are transmitted over the same spatial paths as those on which the uplink signals are received.
13. The method according to clause 11 wherein the plurality of downlink signals are transmitted over all available spatial paths, wherein the available spatial paths are determined based on the received uplink signals.
14. The method according to any of clauses 11 to 13 wherein determining a delay and/or delay spread of the downlink signals comprises one or more of:
   monitoring the delay between paths from the same downlink signal and the delay on a subsequent downlink signal;
   monitoring the time at which an uplink signal is transmitted from the UE along one of the plurality of spatial paths and the time at which a downlink signal is received at the UE along the same spatial path, and comparing the time difference with an expected time difference; and/or
   calculating the time duration that it takes for a signal to be received at the BS from the UE.
15. The method according to any of clauses 11 to 14 wherein the method further comprises precoding a plurality of downlink signals at the base station, wherein the plurality of downlink signals are precoded based on the received plurality of uplink signals.
16. The method according to any of clauses 11 to 15 wherein the method further comprises analysing the received plurality of uplink signals at the base station to determine a delay and/or delay spread of the uplink signals, and determining environmental data about a spatial location based on the delay and/or delay spread.
17. The method according to clause 11 wherein the downlink signals comprise additional environmental information and communication data such that additional environmental information is provided to the UE.
18. The method according to clause 17 wherein the step of determining the environmental information at the UE includes using the additional environmental information.
19. The method according to any of clauses 11 to 17 further comprising determining the amplitudes and phases of the received precoded downlink signals, wherein the environmental information is determined based on the amplitude and/or phase of each precoded downlink signal received at the UE.
20. The method according to any preceding clause wherein the method further comprises transmitting a map from the UE to the base station.
21. A user equipment, UE, configured to perform the method of any preceding clause.
22. The method according to clause 21 wherein the UE is an extended reality device (XR), preferably smart glasses.
23. A multiple-input multiple-output, MIMO, base station, configured to perform the method of any of clauses 1 to 20.
24. The method according to clause 23 wherein the BS is an ISAC MIMO base station.

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.
In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method for sensing using a user equipment, UE, in communication with a multiple-input, multiple-output, MIMO, base station, BS, the method comprising:
communicating a plurality of uplink sensing signals from the UE to the MIMO base station, wherein the plurality of uplink sensing signals are received at the MIMO base station via a plurality of spatial paths, such that the MIMO base station can determine environmental information about a spatial area based on a delay and/or delay spread of the plurality of uplink sensing signals;
communicating the environmental information from the MIMO base station to the UE via a downlink transmission, such that the UE can construct a map of the spatial area using the received environmental information.

2. The method according to any preceding claim further comprising communicating communication data in the same downlink signals as the environmental information.

3. The method according to any preceding claim wherein the uplink sensing signals are uplink pilot signals, such that the BS can determine information about the plurality of spatial paths..

4. The method according to any preceding claim wherein the step of determining environmental information includes monitoring the delay between paths from the same uplink signal and the delay on a subsequent uplink signal.

5. The method according to any preceding claim wherein the environmental information is continuously or periodically determined such that the UE can update the map based on changes in the environmental information.

6. The method according to any preceding claim further comprising combining the environmental information with one or more types of information from one or more sensors, wherein the one or more sensors are located on the UE.

7. The method according to any preceding claim wherein the environmental information is used to control the activation of one or more sensors located on the UE.

8. A method for sensing using a user equipment, UE, in communication with a multiple-input, multiple-output, MIMO, base station, BS, the method comprising:
communicating a plurality of uplink signals from the UE to the MIMO base station, wherein the plurality of uplink signals are received at the MIMO BS via a plurality of spatial paths;
communicating a plurality of precoded downlink signals from the MIMO BS to the UE over some or all of the plurality of spatial paths;
analysing the plurality of precoded downlink signals, at the UE, to determine a delay and/or delay spread of the downlink signals such that the UE can determine environmental information about the spatial area based on the determined delay and/or delay spread.

9. The method according to claim 8 wherein determining a delay and/or delay spread of the downlink signals comprises one or more of:
monitoring the delay between paths from the same downlink signal and the delay on a subsequent downlink signal;
monitoring the time at which an uplink signal is transmitted from the UE along one of the plurality of spatial paths and the time at which a downlink signal is received at the UE along the same spatial path, and comparing the time difference with an expected time difference; and/or
calculating the time duration that it takes for a signal to be received at the BS from the UE.

10. The method according to any of claims 8 to 9 wherein the method further comprises precoding a plurality of downlink signals at the base station, wherein the plurality of downlink signals are precoded based on the received plurality of uplink signals.

11. The according to any of claims 8 to 10 wherein the method further comprises analysing the received plurality of uplink signals at the base station to determine a delay and/or delay spread of the uplink signals, and determining environmental data about a spatial location based on the delay and/or delay spread.

12. The method according to any preceding claim wherein the step of constructing the map is further based on the amplitudes and phases of the received precoded downlink signals.

13. A method according to any preceding claim wherein the method further comprises transmitting the map from the UE to the base station.

14. A user equipment, UE, configured to perform the method of any preceding claim.

15. A multiple-input multiple-output, MIMO, base station, configured to perform the method of any of claims 1 to 13.
